# EUROPÄISCHE PATENTSCHRIFT

(11) **EP 1 591 320 B1**
(45) Veröffentlichungstag und Bekanntmachung des Hinweises auf die Patenterteilung: **27.05.2009**
(21) Anmeldenummer: 05009517.3
(22) Anmeldetag: 29.04.2005
(51) Int. Cl.: B60R 16/02

(54) **Bordnetz und Schalter für ein Bordnetz**
Vehicle electric power network and switch
Réseau de bord pour véhicules et commutateur

(30) Priorität: 30.04.2004 DE 102004021317
(43) Veröffentlichungstag der Anmeldung: 02.11.2005
(73) Patentinhaber: S-Y SYSTEMS TECHNOLOGIES EUROPE GMBH, 93059 Regensburg (DE)
(72) Erfinder: Roderer, Götz, 93051 Regensburg (DE)
(74) Vertreter: Patentanwaltskanzlei WILHELM & BECK

(56) Entgegenhaltungen:
- EP-A- 0 753 925
- DE-A1- 4 028 242
- DE-A1- 19 955 721
- DE-B3-5102004 001 02
- US-A- 3 129 372

## Beschreibung

Die Erfindung betrifft ein Bordnetz gemäß dem Oberbegriff des Patentanspruchs 1 und einen Schalter für ein Bordnetz gemäß dem Oberbegriff des Patentanspruchs 6.

Bordnetze von Kraftfahrzeugen unterliegen derzeit einer rasanten Weiterentwicklung, da die Anzahl der in einem Kraftfahrzeug angeordneten elektrischen Verbraucher stark zunimmt und zudem bisher mechanisch betriebene Funktionen des Kraftfahrzeuges in elektrisch steuerbare Funktionen umgewandelt werden. Für die Bereitstellung von aufwendigen elektrischen Steuersystemen, wie z. B. einer elektrisch betätigbaren Fahrzeugbremse ist es aus DE 197 55 050 C2 bekannt, ein Bordnetz mit zwei Batterien bereit zu stellen. Das bekannte Bordnetz weist zwei unterschiedliche Spannungsbereiche auf, mit denen unterschiedliche Lastgruppen versorgt werden. Für jeden Spannungsbereich ist eine Batterie vorgesehen. Auf diese Weise kann das Bremssystem der Vorderachse mit einer höheren Spannung als das Bremssystem der Hinterachse des Kraftfahrzeuges betrieben werden.

Zudem ist es aus DE 199 22 330 C1 bekannt, einen Schalter für Fahrzeuge, insbesondere einen Hochstromtrennschalter zwischen einer Batterie und einem Verbrauchernetz eines Kraftfahrzeuges vorzusehen. Der bekannte Schalter weist eine zylinderförmige Schaltkulisse auf, die voneinander elektrisch isolierte Leitungsflächen aufweist. Der Zylinderoberfläche sind Schleifkontakte zugeordnet und in Abhängigkeit von der Schaltstellung der Schaltkulisse werden unterschiedliche Schaltkombinationen zwischen den Schleifkontakten eingestellt.

Aus DE 40 28 242 A1 ist ein Bordnetz eines Kraftfahrzeuges für mehrere Verbraucher bekannt, wobei Anschlüsse für zwei Batterien vorgesehen sind. Die zwei Batterien sind abhängig von festgelegten Zuständen über zwei Schalter mit dem Bordnetz verbindbar. Die zwei Schalter sind über eine erste Leitung miteinander verbunden. Jeweils ein Schalter ist mit einer der zwei Batterien verbunden. Der erste Schalter ist über eine zweite Leitung mit einem ersten Verbraucher und der zweite Schalter ist über ein dritte Leitung mit einem zweiten Verbraucher verbunden. Der erste Schalter ist mit einem Startgenerator und mit einem Stromgenerator verbunden.

Aus DE 10 2004 001 025 B3 ist ein Kraftfahrzeugbordnetz mit zwei Energiespeichern bekannt. Dabei ist ein Schalter vorgesehen, der ein drehbar gelagertes Schaltelement aufweist, wobei das Schaltelement wenigstens zwei Endbereiche beinhaltet. Das Schaltelement weist wenigstens in den Endbereichen elektrisch leitende Bereiche auf. Die elektrisch leitenden Bereiche sind Leitungsflächen zugeordnet, wobei abhängig von der Drehposition des Schaltelements über die leitenden Bereiche verschiedene Leitungsflächen miteinander elektrisch leitend kontaktiert werden.

Die Aufgabe der Erfindung besteht darin, ein verbessertes Bordnetz bereitzustellen, das eine Erstfehlersicherheit bietet und bei Unterbrechung einer Leitung eine redundante Leitung zur Verfügung stellt.

Die Aufgabe der Erfindung wird durch das Bordnetz gemäß Patentanspruch 1 gelöst. Ein Vorteil des erfindungsgemäßen Bordnetzes besteht darin, dass das Bordnetz eine erhöhte Fehlersicherheit bei Ausfall einer elektrischen Leitung aufweist. Dieser Vorteil wird dadurch erreicht, dass zwei Batterien vorgesehen sind, die das Bordnetz redundant mit Strom versorgen. Jeder Batterie ist ein Schalter zugeordnet und jeder der Schalter ist mit jeweils einem Verbraucher des Kraftfahrzeuges verbunden. Zudem sind die zwei Schalter über eine elektrische Leitung miteinander verbunden, so dass bei Ausfall einer Leitung oder einer Batterie der Verbraucher über die zweite Batterie mit Strom versorgt wird. In der erfindungsgemäßen Ausführungsform der Erfindung ist der zweite Verbraucher zusätzlich über eine redundante Leitung mit dem ersten Schalter verbunden. Auf diese Weise kann bei Ausfall der ersten Leitung, die die zwei Schalter miteinander verbindet, ein elektrisch leitender Kontakt zwischen den zwei Batterien über die redundante Leitung und den zweiten Verbraucher hergestellt werden.

Weitere vorteilhafte Ausführungsformen der Erfindung sind in den abhängigen Ansprüchen angegeben. Vorzugsweise ist der erste Schalter mit einem Elektrostarter und mit einem Stromgenerator verbunden. Vorzugsweise ist eine der zwei Batterien im Frontbereich und die andere Bereich im Heckbereich des Fahrzeuges angeordnet. Auf diese Weise ist sicher gestellt, dass bei einem Auffahrunfall die Wahrscheinlichkeit, dass nur eine Batterie ausfällt, relativ groß ist. Wird bei einem Heckaufprall nur die im Heckbereich angeordnete Batterie und bei einem Frontaufprall nur die im Frontbereich des Fahrzeuges angeordnete Batterie beschädigt, dann ist jeweils eine der zwei Batterien noch funktionsfähig und kann als Ersatz für die beschädigte Batterie das Bordnetz mit Strom versorgen.

In einer weiteren bevorzugten Ausführungsform des Bordnetzes sind ein oder mehrere Steuergeräte vorgesehen, die die zwei Schalter steuern. Das Steuergerät ist über Spannungsmesser mit der ersten und der zweiten Batterie verbunden, so dass abhängig von dem Spannungszustand der zwei Batterien die Verbraucher über eine entsprechende Schaltposition der zwei Schalter mit der ersten und/oder mit der zweiten Batterie verbunden sind. Auf diese Weise wird eine optimale Spannungsversorgung der Verbraucher gewährleistet.

In einer weiteren bevorzugten Ausführungsform ist ein dritter Schalter zwischen den zwei Batterien vorgesehen, der eine elektrische Verbindung zwischen den Batterien ermöglicht.

In einer bevorzugten Ausführungsform weist das Bordnetz einen elektrischen Schalter auf, der ein drehbar gelagertes Schaltelement mit in zwei Endbereichen voneinander isolierte Leitungsflächen beinhaltet. Die Leitungsflächen sind teilbogenförmigen Leiterstreifen zugeordnet, die in Form von Kreisbögen um einen Drehpunkt des Schaltelementes angeordnet sind. Die Kreisbögen weisen unterschiedliche Durchmesser auf. In Abhängigkeit von der Drehposition des Schaltelementes werden verschiedene Leiterstreifen elektrisch miteinander verbunden. Die beschriebene Ausbildungsform des elektrischen Schalters bietet einen kompakten Aufbau und eine robuste Funktionsfähigkeit.

In einer weiteren Ausführungsform weist der Schalter als Schaltelement ein Drehkreuz auf, das wenigstens drei elektrisch leitende Arme beinhaltet. Die Endbereiche der Arme sind in einer Zylindermantelfläche drehbar gelagert. Der Zylindermantelfläche sind Schleifkontakte des Bordnetzes zugeordnet. In Abhängigkeit von der Drehposition des Drehkreuzes werden unterschiedliche Schleifkontakte elektrisch leitend miteinander verbunden. Die beschriebene Ausbildungsform stellt einen robusten Schalter dar.

Die Erfindung wird im Folgenden anhand der Figuren näher erläutert. Es zeigen:
Figur 1 ein Bordnetz eines Kraftfahrzeuges mit zwei Batterien;
Figur 2 ein Bordnetz eines Kraftfahrzeuges mit zwei Steuereinheiten zum Steuern von Schaltern des Bordnetzes;
Figur 3 drei Schaltzustände des Bordnetzes;
Figur 4 drei weitere Schaltzustände des Bordnetzes;
Figur 5 zwei Schaltzustände zur Vermeidung von Fehlpolungen;
Figur 6 drei Schaltzustände für Auffahrunfälle im Frontbereich;
Figur 7 drei Schaltzustände für Auffahrunfälle im Heckbereich;
Figur 8 drei weitere Schaltzustände für Unfallsituationen;
Figur 9 eine erste Schaltposition eines ersten Schalters;
Figur 10 eine zweite Schaltposition des ersten Schalters;
Figur 11 einen zweiten Schalter in einer ersten Schaltposition; und
Figur 12 eine zweite Schaltposition des zweiten Schalters.

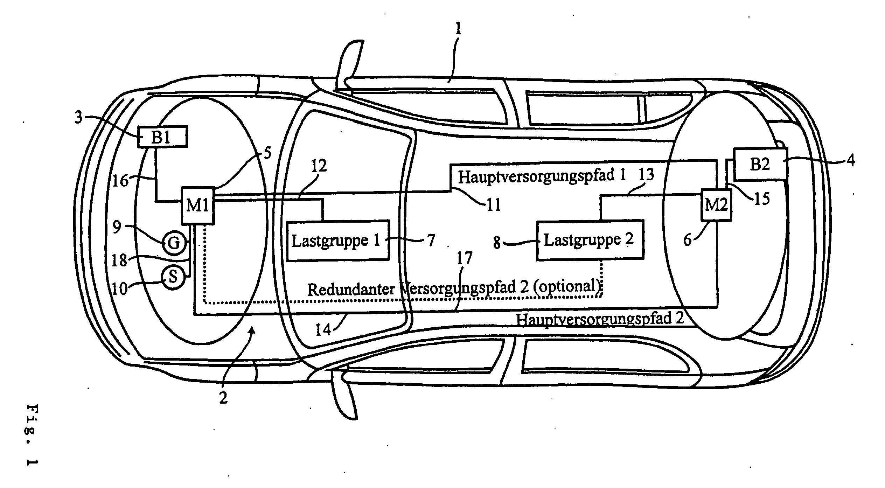

Figur 1 zeigt in einer schematischen Darstellung ein Ausführungsbeispiel eines Bordnetzes 2, das in einer Fahrzeugkarosserie 1 eingebaut ist. Das Bordnetz 2 weist eine erste Batterie 3 im Frontbereich und eine zweite Batterie 4 im Heckbereich der Fahrzeugkarosserie 1 auf. Die erste Batterie 3 ist über eine sechste Leitung 16 mit einem ersten Schalter 5 elektrisch leitend verbunden. An den ersten Schalter 5 sind über eine achte Leitung 18 ein Stromgenerator 9 und ein Startergenerator 10 angeschlossen. Weiterhin ist an den ersten Schalter 5 ein erster Verbraucher 7 über eine zweite Leitung 12 angeschlossen. Anstelle des ersten Verbrauchers 7 kann auch eine Gruppe von Verbrauchern an den ersten Schalter angeschlossen sein. Der erste Schalter 5 ist über eine erste Leitung 11 mit einem zweiten Schalter 6 elektrisch leitend verbunden. Der zweite Schalter 6 steht über eine fünfte Leitung 15 mit der zweiten Batterie 4 in Verbindung. Zudem sind an den zweiten Schalter 6 über eine dritte Leitung 13 ein zweiter Verbraucher 8 angeschlossen. Anstelle des zweiten Verbrauchers 8 kann auch eine Gruppe von zweiten Verbrauchern über die dritte Leitung 13 an den zweiten Schalter 6 angeschlossen sein. In einer bevorzugten Ausführungsform sind der erste und der zweite Schalter 5, 6 über eine vierte Leitung 14 elektrisch leitend miteinander verbunden. Die erste Leitung 11 stellt einen ersten Hauptversorgungspfad und die vierte Leitung 14 einen zweiten Hauptversorgungspfad dar. In Abhängigkeit von der gewählten Ausführungsform kann zusätzlich der zweite Verbraucher 8 über eine siebte Leitung 17 an den ersten Schalter 5 angeschlossen sein. Die siebte Leitung 17 stellt einen redundanten Versorgungspfad für den zweiten Verbraucher 8 dar. In der Ausführungsform, bei der anstelle des zweiten Verbrauchers 8 eine Gruppe von zweiten Verbrauchern 8 angeordnet sind, sind alle zweiten Verbraucher der Gruppe über die siebte Leitung 17 an den ersten Schalter 5 angeschlossen.

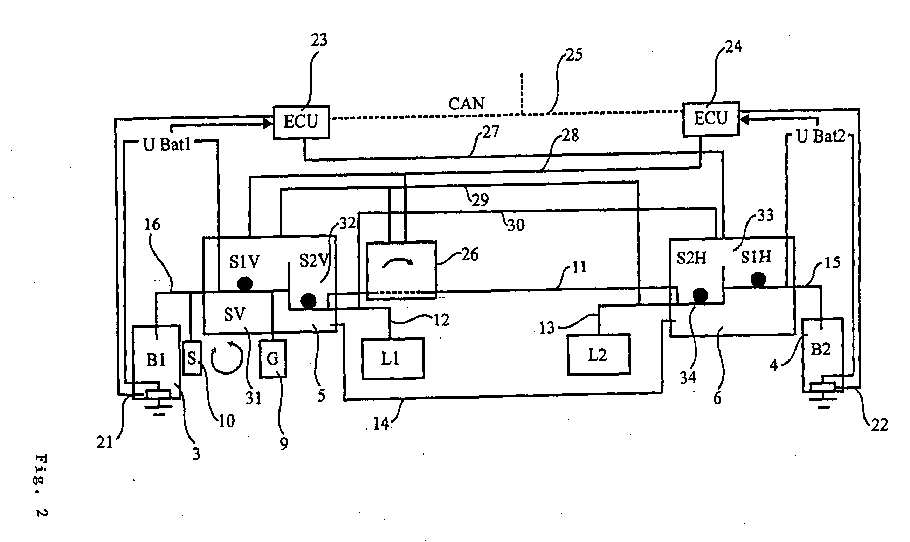

Figur 2 zeigt eine detaillierte Darstellung des Bordnetzes 2 der Figur 1. In dieser Ausführungsform ist in der ersten Leitung 11 eine Schalteinheit 26 angeordnet, die abhängig von der Schaltposition einen Stromfluss zwischen der ersten und der zweiten Batterie 3, 4 und dem Stromgenerator 9 ermöglicht. Weiterhin sind ein erstes und ein zweites Steuergerät 23, 24 vorgesehen, wobei das erste Steuergerät 23 über eine erste Steuerleitung 27 mit dem zweiten Schalter 6 verbunden ist. Das erste Steuergerät 23 ist zudem mit einem ersten Spannungsmesser 21 über Signalleitungen verbunden, der der ersten Batterie 3 zugeordnet ist. Der erste Spannungsmesser 21 erfasst die Spannung der ersten Batterie 3 und stellt den gemessenen Spannungswert dem ersten Steuergerät 23 zur Verfügung. Das zweite Steuergerät 24 ist an einen zweiten Spannungsmesser 22 angeschlossen, der der zweiten Batterie 4 zugeordnet ist. Der zweite Spannungsmesser 22 erfasst die Spannung der zweiten Batterie 4 und stellt die gemessene Spannung dem zweiten Steuergerät 24 zur Verfügung. Das zweite Steuergerät 24 steht zudem über eine zweite Steuerleitung 28 mit dem ersten Schalter 5 in Verbindung. Zudem sind das erste und das zweite Steuergerät 23, 24 vorzugsweise über einen Datenbus 25, wie z. B. dem CAN-Bus miteinander verbunden. Die erste und zweite Steuerleitung 27, 28 sind vorzugsweise auch an den Datenbus 25 angeschlossen. Zudem sind vorzugsweise zwischen der zweiten Leitung 12 und dem zweiten Schalter 6 eine zweite Versorgungsleitung 30 und zwischen der dritten Leitung 13 und dem ersten Schalter 5 eine erste Versorgungsleitung 29 vorgesehen. Die erste und die zweite Versorgungsleitung 29, 30 sind zur Stromversorgung des ersten und des zweiten Schalters 5, 6 vorgesehen. Der erste Schalter 5, der der ersten Batterie 3 zugeordnet ist, ist als elektrischer Schalter ausgebildet und wird von der zweiten Batterie 4 mit Strom versorgt. Der zweite Schalter 6 ist als elektrischer Schalter ausgebildet und wird von der ersten Batterie 3 mit Strom versorgt. Die erste Versorgungsleitung 29 und die zweite Steuerleitung 28 sind an die Schalteinheit 26 angeschlossen. Die Schalteinheit 26 ist als elektrisches Schaltelement ausgebildet und wird von der zweiten Batterie 4 mit Strom versorgt. Die Schalteinheit 26 wird vom zweiten Steuergerät 24 angesteuert.

In der dargestellten Ausführungsform weisen der erste Schalter 5 einen ersten Frontschalter 31 auf, der zwischen dem Stromgenerator 9 und dem Startergenerator 10 und der ersten Batterie 3 angeordnet ist. Zudem weist der erste Schalter 5 einen zweiten Frontschalter 32 auf, der zwischen dem Stromgenerator 9 und der ersten, zweiten und vierten Leitung 11, 12, 14 angeordnet ist. Der zweite Schalter 6 weist einen ersten Heckschalter 33 auf, der an die fünfte Leitung 15 angeschlossen ist. Zudem weist der zweite Schalter 6 einen zweiten Heckschalter 34 auf, der zwischen der ersten, der dritten und der vierten Leitung 11, 13, 14 und dem ersten Heckschalter 33 angeordnet ist. Die Schaltposition des ersten und des zweiten Heckschalters 33, 34 werden vom ersten Steuergerät 23 und die Schaltpositionen des ersten und des zweiten Frontschalters 31, 32 werden vom zweiten Steuergerät 24 gesteuert.

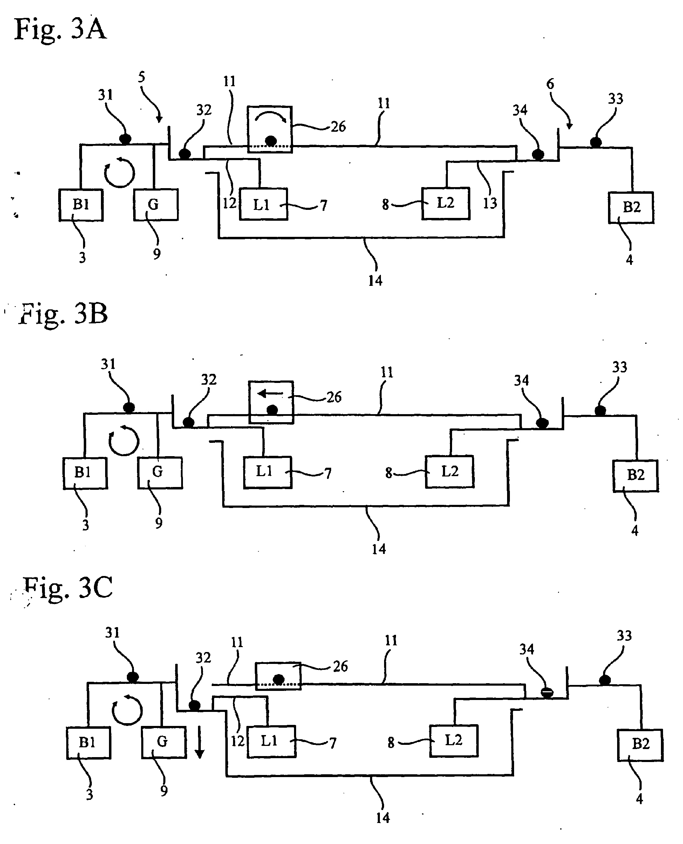

Die Figuren 3 bis 8 zeigen verschiedene Schaltzustände des Bordnetzes 2. Die Schaltzustände werden von dem ersten und/oder dem zweiten Steuergerät 23, 24 eingestellt, um bei Auftreten einer Leitungsunterbrechung die Stromversorgung über eine redundante Leitung aufrechtzuerhalten. Dazu sind die Steuergeräte mit entsprechenden Sensoren verbunden, die die Spannungs- und Stromversorgung der Verbraucher und den Ladezustand der Batterien überwachen. Auf diese Weise wird auch bei Auftreten eines Erstfehlers die Funktionsfähigkeit'des Kraftfahrzeuges gewährleistet. Die Steuergeräte trennen bei Erkennen einer Beschädigung einer elektrischen Leitung die beschädigte Leitung vom Bordnetz und stellen eine redundante Stromversorgung im Bordnetz her. Die Steuergeräte 23, 24 steuern den ersten und den zweiten Schalter 5, 6 und die Schalteinheit 26 entsprechend an. Die Beschädigung einer elektrischen Leitung wird beispielsweise über einen Strom- oder Spannungssensor von den Steuergeräten überwacht. Der Startergenerator 10 stellt einen Startermotor für eine Brennkraftmaschine dar.

Figur 3A zeigt einen ersten Schaltzustand, der einem Normalbetrieb des Bordnetzes entspricht. Im ersten Schaltzustand ist der erste Frontschalter 31 geschlossen, so dass die erste Batterie 3 mit dem Stromgenerator 9 elektrisch leitend verbunden ist. Der zweite Frontschalter 32 stellt eine elektrisch leitende Verbindung zwischen der ersten Batterie 3 und der ersten und der zweiten Leitung 11, 12 her. Der erste Heckschalter 33 ist ebenfalls leitend geschaltet und stellt eine elektrisch leitende Verbindung zwischen der zweiten Batterie 4 und dem zweiten Heckschalter 34 ein. Der zweite Heckschalter 34 stellt eine elektrisch leitende Verbindung zwischen der zweiten Batterie 4 und der ersten und der dritten Leitung 11, 13 her.

Figur 3B stellt die Situation dar, bei der die erste Batterie 3 entladen ist und sowohl über den Stromgenerator 9 als auch über die Schalteinheit 26 elektrisch aufgeladen wird. Dazu ist die Schalteinheit 26 leitend in Richtung der ersten Batterie 3 geschaltet. Die Schaltzustände der Schalter entsprechen den Schaltzuständen der Figur 3A.

Figur 3C stellt die Schaltsituation beim Start der Brennkraftmaschine dar. In dieser Schaltsituation ist die Schalteinheit 26 sperrend geschaltet, so dass keine elektrisch leitende Verbindung zwischen dem ersten und dem zweiten Schalter 5, 6 über die erste Leitung 11 vorhanden ist. In dieser Schaltposition wird der nicht dargestellte Startergenerator 10 nur durch die erste Batterie 3 mit Strom versorgt. Zudem ist der erste Frontschalter 31 elektrisch leitend geschaltet und der zweite Frontschalter 32 stellt vorzugsweise eine elektrisch leitende Verbindung zwischen dem Stromgenerator 9 und der zweiten Leitung 12 und der vierten Leitung 14 her.

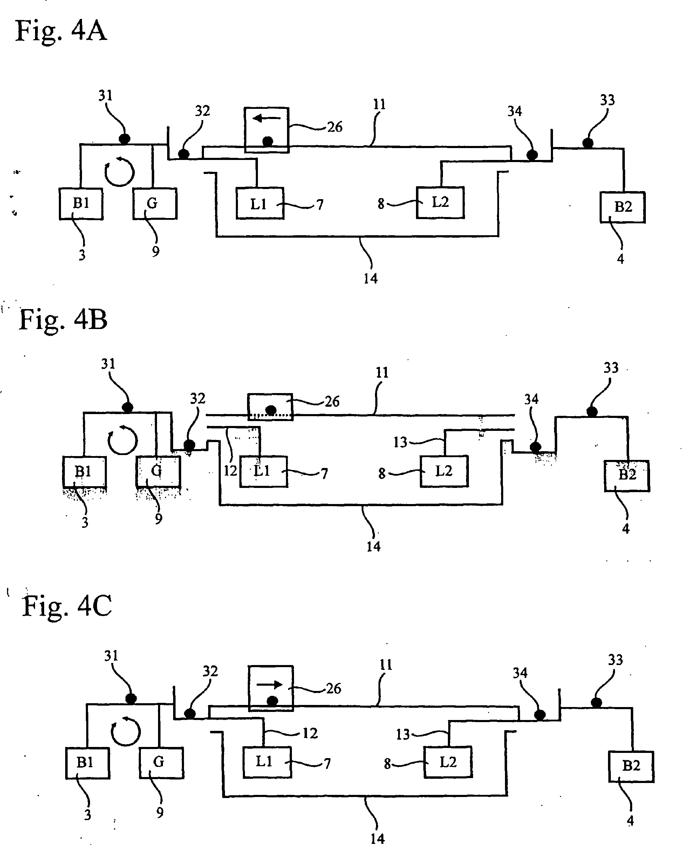

Figur 4A stellt die Schaltposition dar, bei der die erste Batterie 3 von der zweiten Batterie 4 durch die Schalteinheit 26 elektrisch geladen wird. Dazu ist die Schalteinheit 26 elektrisch leitend geschaltet. Die Schaltzustände der Schalter entsprechen den Schaltzuständen der Figur 3A, so dass auch der erste und der zweite Verbraucher 7, 8 elektrisch leitend mit der ersten bzw. mit der zweiten Batterie 3, 4 verbunden sind.

Figur 4B stellt eine Schnellladesituation dar, in der die erste Batterie 3 durch die zweite Batterie 4 geladen wird, wobei der erste und der zweite Verbraucher 7, 8 von der Stromversorgung abgekoppelt sind. In dieser Schaltposition ist die zweite Batterie 4 über den ersten Heckschalter 33, den zweiten Heckschalter 34, die vierte Leitung 14, den zweiten Frontschalter 32 und den ersten Frontschalter 31 elektrisch leitend mit der ersten Batterie 3 verbunden.

Figur 4C stellt eine Schaltsituation dar, in der die zweite Batterie 4 entladen ist und bei laufendem Motor, d. h. bei angetriebenem Stromgenerator 9 über eine leitend geschaltete Schalteinheit 26 geladen und zudem der erste und der zweite Verbraucher 7, 8 mit Strom versorgt werden. In dieser Situation ist die Schalteinheit 26 in der Weise geschaltet, dass elektrische Ladung vom ersten Schalter 5 zum zweiten Schalter 6 und zur zweiten Batterie 4 übertragen wird, die im Wesentlichen vom Stromgenerator 9 erzeugt wird.

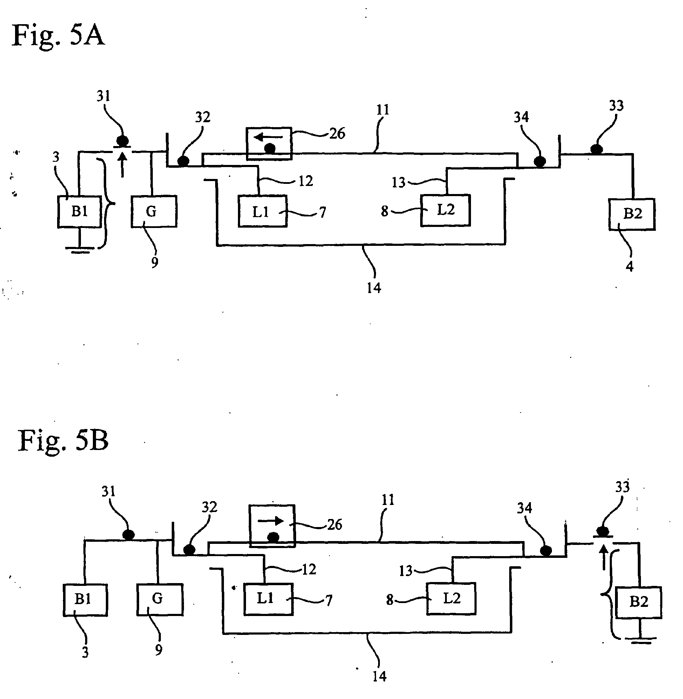

Figur 5A zeigt die Schaltsituation des Bordnetzes 2, wenn die erste Batterie 3 mit einer falschen Polarität angeschlossen wird. In dieser Situation überprüft das erste Steuergerät 23 die Polarität der angeschlossenen ersten Batterie 3, dabei erkennt das erste Steuergerät 23, dass die erste Batterie 3 mit einer falschen Polarität angeschlossen ist und öffnet sofort den ersten Frontschalter 31. Zudem wird die Schalteinheit 26 in der Weise geschaltet, dass der erste Verbraucher 7 über die erste Leitung 11 mit Strom von der zweiten Batterie 4 versorgt wird. Zudem ist der erste Verbraucher 7 über den zweiten Frontschalter 32 elektrisch leitend mit dem Stromgenerator 9 verbunden. Der zweite Verbraucher 8 wird über den ersten und den zweiten Heckschalter 33, 34 von der zweiten Batterie 4 mit Strom versorgt.

Figur 5B zeigt die Schaltsituation des Bordnetzes 2, wenn die zweite Batterie 4 mit einer falschen Polarität an das Bordnetz 2 angeschlossen wird. In dieser Situation erkennt das zweite Steuergerät 24 über den zweiten Spannungsmesser 22 die falsche Polarität der zweiten Batterie 4 und öffnet den ersten Heckschalter 33. Zudem wird die Schalteinheit 26 in der Weise geschaltet, dass der zweite Verbraucher 8 von der ersten Batterie 3 und dem Stromgenerator 9 mit Strom versorgt wird. Dazu ist der erste Frontschalter 31 elektrisch leitend zwischen der ersten Batterie 3 und dem zweiten Frontschalter 32 geschaltet. Der zweite Frontschalter 32 stellt eine elektrisch leitende Verbindung zwischen der ersten Batterie 3 und dem Stromgenerator 9 und der Schalteinheit 26 und dem ersten Verbraucher 7 her.

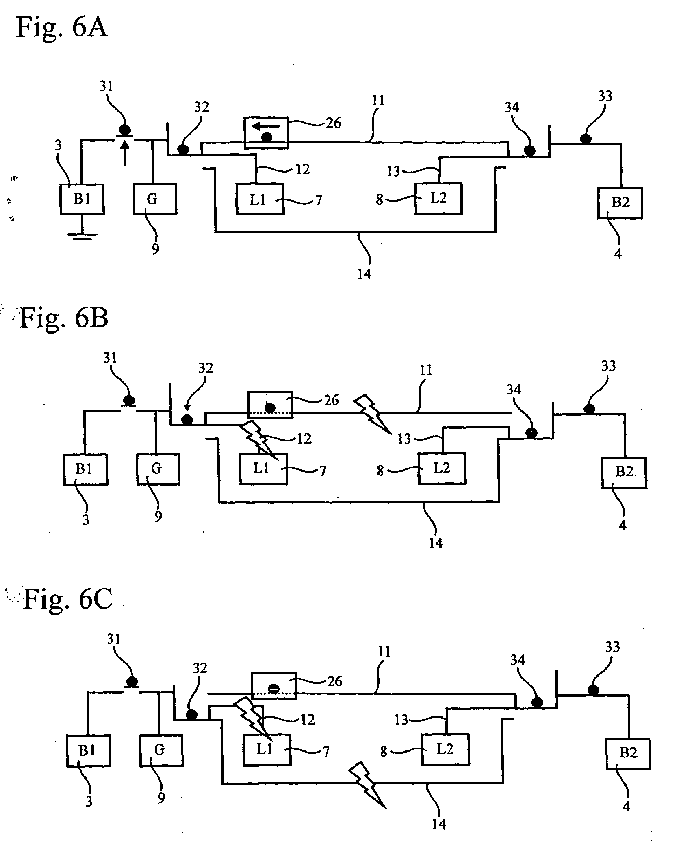

Figur 6A zeigt eine Schaltsituation, bei der ein Frontalaufprall vorausberechnet wurde. In dieser Schaltsituation ist der erste Frontschalter 31 geöffnet und die Schalteinheit 26 in der Weise geschaltet, dass der erste Verbraucher 7 über die zweite Batterie 4, die sich im Heckbereich des Kraftfahrzeuges befindet, mit Strom versorgt wird. Dazu ist die Schalteinheit 26 über den zweiten Frontschalter 32 mit der zweiten Leitung 12 und dem ersten Verbraucher 7 elektrisch leitend verbunden. Zudem ist die Schalteinheit 26 über den zweiten und den ersten Heckschalter 34, 33 elektrisch leitend mit der zweiten Batterie 4 verbunden.

Figur 6B zeigt eine Schaltsituation, bei der bei einem Frontaufprall die erste Leitung 11 und die zweite Leitung 12 beschädigt wurden. In dieser Schaltsituation ist der erste Frontschalter 31 geöffnet, so dass die erste Batterie 3 vom Bordnetz abgekoppelt ist. Der zweite Heckschalter 34 ist in der Weise geschaltet, dass die erste Leitung 11 von der zweiten Batterie 4 abgekoppelt ist. Somit wird in dieser Situation der zweite Verbraucher 8 über den zweiten Heckschalter 34 und den ersten Heckschalter 33 von der zweiten Batterie 4 versorgt. Der erste Verbraucher 7 ist von der Stromversorgung abgekoppelt, da die Schalteinheit 26 elektrisch isolierend, d.h. nicht leitend geschaltet ist.

Figur 6C zeigt eine zweite Schaltsituation nach einem Frontaufprall. In dieser Situation ist die vierte Leitung 14 und die zweite Leitung 12 durch den Aufprall beschädigt. In dieser Situation ist der erste Frontschalter 31 geöffnet, so dass die erste Batterie 3 vom Bordnetz abgekoppelt ist. Der zweite Frontschalter 32 ist in der Weise geschaltet, dass der Startergenerator 9 elektrisch leitend mit der zweiten und der vierten Leitung 12, 14 geschaltet ist und die erste Leitung 11 vom Startergenerator 9 abgekoppelt ist. Die Schalteinheit 26 ist elektrisch isolierend geschaltet. Der erste Heckschalter 33 ist elektrisch leitend geschaltet und der zweite Heckschalter 34 stellt eine elektrisch leitende Verbindung zwischen der zweiten Batterie 4 und der ersten und der dritten Leitung 11, 13 her. Auf diese Weise wird der zweite Verbraucher 8 von der zweiten Batterie 4 mit Strom versorgt.

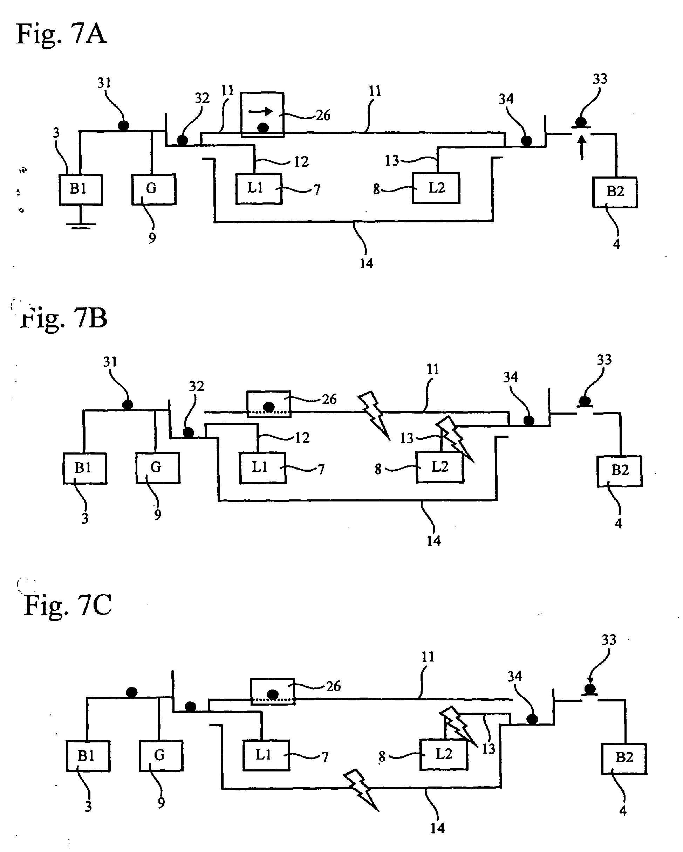

Figur 7A stellt eine Schaltsituation des Bordnetzes dar, die bei Erkennen eines drohenden Heckaufpralls eingestellt wird. In dieser Schaltsituation wird der erste Heckschalter 33 geöffnet, so dass die zweite Batterie 4 vom Bordnetz abgekoppelt ist. Zudem wird die Schalteinheit 26 elektrisch leitend geschaltet, so dass der zweite Verbraucher 8 über den zweiten Heckschalter 34, die Schalteinheit 26 und den ersten und den zweiten Frontschalter 31, 32 von der ersten Batterie 3 mit Strom versorgt wird. Dazu sind der erste Frontschalter 31 elektrisch leitend geschaltet und der zweite Frontschalter 32 stellt eine elektrisch leitende Verbindung zwischen der ersten und der zweiten Leitung 11, 12 her.

Figur 7B stellt eine Schaltsituation nach einen Heckaufprall dar, bei der die erste und die dritte Leitung 11, 13 beschädigt wurden. Bei dieser Schaltsituation ist der erste Heckschalter 33 geöffnet, so dass die zweite Batterie 4 vom Bordnetz abgekoppelt ist. Die Schalteinheit 26 ist elektrisch sperrend geschaltet. Der zweite Frontschalter 32 ist in der Weise geschaltet, dass die erste Leitung 11 vom Generator 9 abgekoppelt ist. Der zweite Frontschalter 32 stellt eine elektrisch leitende Verbindung zwischen der ersten Batterie 3 und der zweiten und der vierten Leitung 12, 14 her.

Figur 7C stellt eine weitere Schaltsituation nach einem Heckaufprall dar. Bei dieser Schaltsituation ist der erste Heckschalter 33 geöffnet, so dass die zweite Batterie 4 vom Bordnetz getrennt ist. Diese Schaltsituation wird eingestellt, wenn die dritte und die vierte Leitung 13, 14 durch den Heckaufprall beschädigt wurden. Die Schalteinheit 26 ist elektrisch isolierend geschaltet. Der erste Verbraucher 7 wird über den ersten und den zweiten Frontschalter 31, 32 von der ersten Batterie 3 mit Strom versorgt. Die vierte Leitung 14 ist vom Stromgenerator 9 abgekoppelt. Der zweite Heckschalter 34 ist in der Weise geschaltet, dass die dritte und die vierte Leitung 13, 14 elektrisch leitend miteinander verbunden sind.

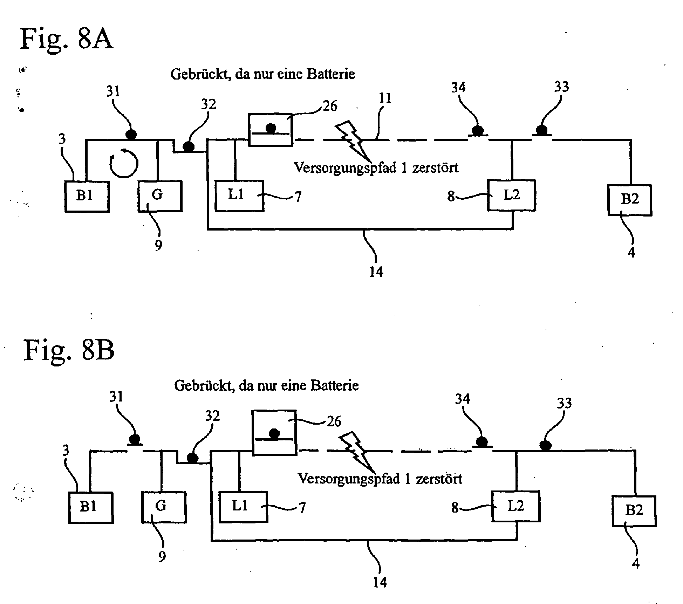

Die Figuren 8A und 8B zeigen Schaltzustände, die bei einem Heckaufprall eingestellt werden. Zudem ist in dieser Ausführungsform der zweite Verbraucher 8 zwischen den ersten und den zweiten Heckschalter 33, 34 angeordnet. In dieser Schaltposition sind der erste und der zweite Heckschalter 33, 34 geöffnet, so dass die zweite Batterie 4 von der ersten und von der vierten Leitung 11, 14 getrennt ist. Die Schalteinheit 26 ist sperrend geschaltet. Der erste Frontschalter 31 ist leitend geschaltet und verbindet die erste Batterie 3 mit dem Stromgenerator 9. Der zweite Frontschalter 32 ist in der Weise geschaltet, dass sowohl der erste als auch der zweite Verbraucher 7, 8 über den zweiten Frontschalter 32 mit der ersten Batterie 3 elektrisch leitend verbunden sind.

In Figur 8B ist ein weiterer Fehlerfall dargestellt, bei dem die erste Batterie 3 durch einen Frontaufprall beschädigt wurde und zudem die erste Leitung 11 beschädigt ist. In dieser Schaltungsanordnung wird der erste Verbraucher 8 durch die zweite Batterie 4 mit Strom versorgt. Zudem geht über den ersten Verbraucher 8 eine elektrisch leitende Verbindung über die vierte Leitung 14 zum ersten Verbraucher 7. Dazu ist der zweite Frontschalter 32 in der Weise geschaltet, dass die vierte Leitung 14 elektrisch leitend mit dem ersten Verbraucher 7 verbunden ist. Der erste Frontschalter 31 ist in den Offenzustand geschaltet. Die Schalteinheit 26 ist sperrend geschaltet. Der erste Heckschalter 33 ist leitend geschaltet. Der zweite Heckschalter 34 ist in die Offenposition geschaltet.

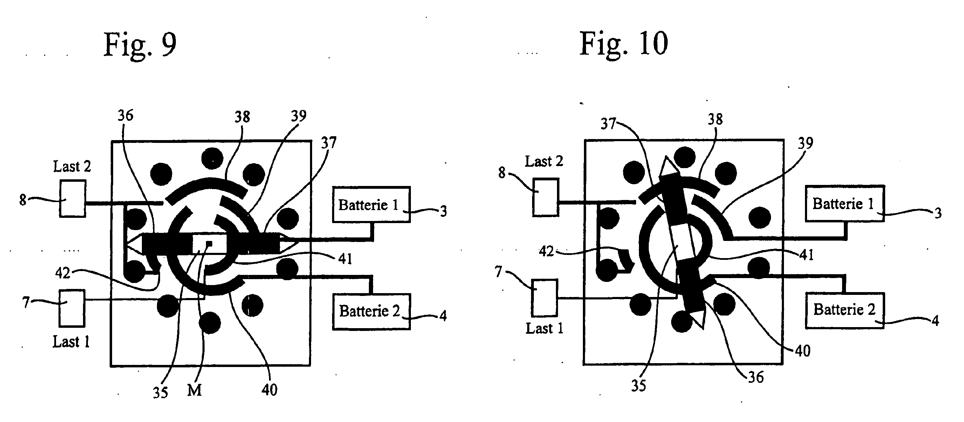

Figur 9 zeigt in einer schematischen Darstellung ein Ausführungsbeispiel für einen Schalter, der zur Realisierung des ersten und zweiten Schalters 5, 6 eingesetzt wird. Der Schalter weist ein Schaltelement in Form eines um einen Mittelpunkt M drehbar gelagerten Balkens 35 auf. Der Balken 35 weist in gegenüberliegenden Endbereichen eine erste bzw. eine zweite Leitungsfläche 36, 37 auf, die voneinander elektrisch isoliert sind. Um den Mittelpunkt M sind mehrere teilbogenförmige Leiterbahnen 38, 39, 40, 41, 42 angeordnet, wobei jeweils eine Leiterbahn 38, 39, 40, 41, 42 mit einer elektrischen Leitung eines Bordnetzes 2 verbunden ist. In dem dargestellten Ausführungsbeispiel ist der erste Verbraucher 7 elektrisch leitend mit einer vierten Leiterbahn 41 verbunden. Eine dritte Leiterbahn 40 ist elektrisch leitend mit der zweiten Batterie 4 verbunden. Die erste Batterie 3 ist mit einer zweiten Leiterbahn 39 kontaktiert. Der zweite Verbraucher 8 ist elektrisch leitend mit einer ersten und einer fünften Leiterbahn 38, 42 elektrisch leitend verbunden. Jede Leiterbahn ist als teilkreisförmige Bahn ausgebildet, wobei die Leiterbahnen unterschiedliche Radien aufweisen können. Somit sind die Leiterbahnen teilweise in radieller Richtung nacheinander angeordnet. In Abhängigkeit von der Drehposition und der Anordnung der Leiterbahnen werden unterschiedliche elektrische Leitungen, d. h. unterschiedliche elektrische Komponenten des Bordnetzes 2 miteinander elektrisch leitend verbunden.

Die Figuren 9 und 10 zeigen eine erste Ausführungsform eines Schalters. Figur 9 zeigt eine Position des Balkens 35, bei der der erste Verbraucher 7 über die vierte Leiterbahn 41 elektrisch leitend über die zweite Leiterbahn 39 mit der ersten Batterie 3 verbunden ist. Zudem ist in dieser Schaltposition der zweite Verbraucher 8 über die fünfte Leiterbahn 42, die erste Leitungsfläche 36 und die dritte Leiterbahn 40 elektrisch leitend mit der zweiten Batterie 4 verbunden.

Figur 10 zeigt eine zweite Schaltposition des Balkens 35, in der der erste und der zweite Verbraucher 7, 8 miteinander an die zweite Batterie 4 angeschlossen sind. Dazu steht der erste Verbraucher 7 über die vierte Leiterbahn 41, die erste Leitungsfläche 36 und die dritte Leiterbahn 40 in elektrischem Kontakt mit der zweiten Batterie 4. Der zweite Verbraucher 8 steht über die erste Leiterbahn 38, die zweite Leitungsfläche 37, die vierte Leiterbahn 41, die erste Leitungsfläche 36 und die dritte Leiterbahn 40 elektrisch leitend mit der zweiten Batterie 4 in Verbindung. Der Balken 35 kann durch verschiedene elektrische Mittel drehbar angetrieben werden.

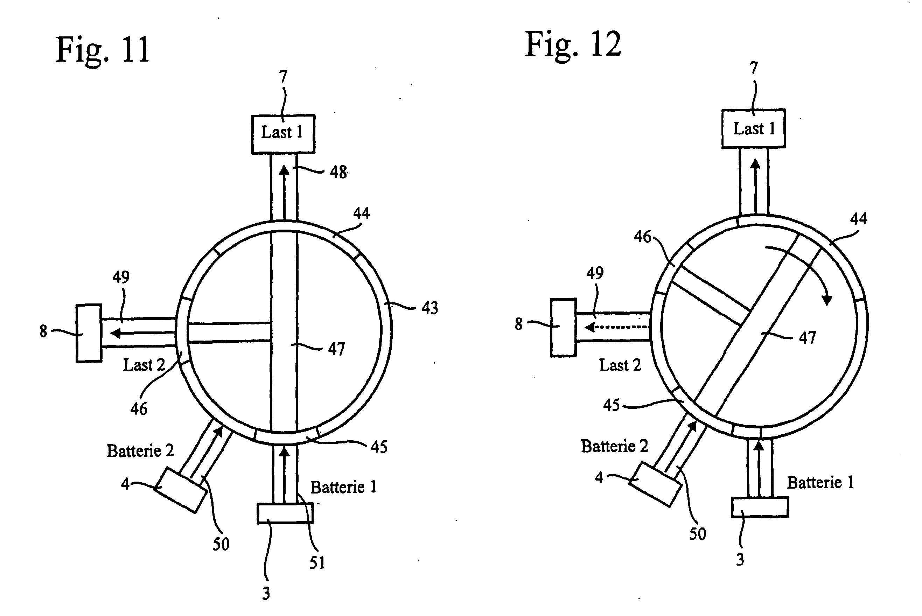

Figur 11 und Figur 12 zeigen eine weitere Ausführungsform eines Schalters 5, 6, der im Wesentlichen einen Ring 43 aufweist, an den eine erste, eine zweite und eine dritte Kontaktfläche 44, 45, 46 drehbar gelagert ist. Die drei Kontaktflächen 44, 45, 46 stehen über ein Drehkreuz 47 elektrisch leitend miteinander in Verbindung. Das Drehkreuz 47 weist drei Arme auf, wobei jeweils ein Arm an einer der Kontaktflächen 44, 45, 46 befestigt ist. Das Drehkreuz 47 ist über entsprechende Mittel drehbar innerhalb des Ringes 43 gelagert. Die Kontaktflächen 44, 45, 46 weisen Flächen auf, die auf der Außenseite des Ringes 43 angeordnet sind. Der Außenseite des Ringes 43 sind in dem dargestellten Ausführungsbeispiel vier Schleifkontakte 48, 49, 50, 51 zugeordnet.

Der Ring 43 besteht aus einem elektrisch isolierenden Material, so dass bei Anlage eines der Schleifkontakte 48 bis 51 kein elektrischer Strom fließt. Der elektrische Strom wird durch die Kontaktflächen 44, 45, 46 und das aus einem elektrisch leitenden Material gebildeten Drehkreuz 47 auf die Schleifkontakte übertragen.

In Abhängigkeit von der Drehposition werden unterschiedliche Kombinationen von Schleifkontakten 48, 49, 50, 51 elektrisch leitend miteinander verbunden. Der erste Schleifkontakt 48 ist mit dem ersten Verbraucher 7, der zweite Schleifkontakt 49 mit dem zweiten Verbraucher 8, der dritte Schleifkontakt 50 mit der zweiten Batterie 4 und der vierte Schleifkontakt 51 mit der ersten Batterie 3 elektrisch leitend verbunden. Im dargestellten Ausführungsbeispiel werden der erste und der zweite Verbraucher 7, 8 von der ersten Batterie 3 mit Strom versorgt.

Figur 12 zeigt eine zweite Drehposition des Drehkreuzes 47, in der der erste Verbraucher 7 mit der zweiten Batterie 4 elektrisch leitend verbunden ist. Die erste Batterie 3 und der zweite Verbraucher 8 sind in dieser Stellung des Drehkreuzes nicht an das Bordnetz angeschlossen.

### Bezugszeichenliste

- 1: Fahrzeugkarosserie
- 2: Bordnetz
- 3: erste Batterie
- 4: zweite Batterie
- 5: erster Schalter
- 6: zweiter Schalter
- 7: erster Verbraucher
- 8: zweiter Verbraucher
- 9: Stromgenerator
- 10: Startergenerator
- 11: erste Leitung
- 12: zweite Leitung
- 13: dritte Leitung
- 14: vierte Leitung
- 15: fünfte Leitung
- 16: sechste Leitung
- 17: siebte Leitung
- 18: achte Leitung
- 19: neunte Leitung
- 20: zehnte Leitung
- 21: erster Spannungsmesser
- 22: zweiter Spannungsmesser
- 23: erstes Steuergerät
- 24: zweites Steuergerät
- 25: CAN-Bus
- 26: Schalteinheit
- 27: erste Steuerleitung
- 28: zweite Steuerleitung
- 29: erste Übertragungsleitung
- 30: zweite Übertragungsleitung
- 31: erster Frontschalter
- 32: zweiter Frontschalter
- 33: erster Heckschalter
- 34: zweiter Heckschalter
- 35: Balken
- 36: erste Leitungsfläche
- 37: zweite Leitungsfläche
- 38: erste Leiterbahn
- 39: zweite Leiterbahn
- 40: dritte Leiterbahn
- 41: vierte Leiterbahn
- 42: fünfte Leiterbahn
- 43: Ring
- 44: erste Kontaktfläche
- 45: zweite Kontaktfläche
- 46: dritte Kontaktfläche
- 47: Drehkreuz
- 48: erster Schleifkontakt
- 49: zweiter Schleifkontakt
- 50: dritter Schleifkontakt
- 51: vierter Schleifkontakt

## Patentansprüche

1. Bordnetz (2) eines Kraftfahrzeuges für mehrere Verbraucher (7, 8) mit Anschlüssen für zwei Batterien (3, 4), die abhängig von festgelegten Zuständen über zwei Schalter (5, 6) mit dem Bordnetz (2) verbindbar sind,
wobei, die zwei Schalter (5, 6) über eine erste Leitung (11) miteinander verbunden sind,
wobei jeweils ein Schalter (5, 6) mit einer der zwei Batterien (3, 4) verbunden ist, wobei der erste Schalter (5) über eine zweite Leitung (12) mit einem ersten Verbraucher (7) und der zweite Schalter (6) über eine dritte Leitung (13) mit einem zweiten Verbraucher (8) verbunden ist,
wobei der erste Schalter (5) mit einem Startergenerator (10) und mit einem Stromgenerator (9) verbunden ist, **dadurch gekennzeichnet, dass** der zweite Verbraucher (8) zusätzlich über eine redundante Leitung (14) mit dem ersten Schalter (5) verbunden ist.

2. Bordnetz nach Anspruch 1, **dadurch gekennzeichnet, dass** eine der zwei Batterien (3) im Frontbereich des Fahrzeuges (1) und die andere Batterie (4) im Heckbereich des Fahrzeuges (1) angeordnet ist.

3. Bordnetz nach einem der Ansprüche 1 oder 2, **dadurch gekennzeichnet, dass** der zweite Verbraucher (8) über den zweiten Schalter (6) mit der redundanten Leitung (14) verbindbar ist.

4. Bordnetz nach einem der Ansprüche 1 bis 3, **dadurch gekennzeichnet, dass** wenigstens ein Steuergerät (23, 24) vorgesehen ist, das zur Steuerung der zwei Schalter (5, 6) vorgesehen ist, dass das Steuergerät (23, 24) über Spannungsmesser (21, 22) mit der ersten und der zweiten Batterie (3, 4) verbunden ist, und dass das Steuergerät (23, 24) abhängig von den Spannungen der zwei Batterien (3, 4) die Verbraucher mit der ersten und/oder mit der zweiten Batterie (3, 4) mit Spannung versorgt.

5. Bordnetz nach einem der Ansprüche 1 bis 4, **dadurch gekennzeichnet, dass** in der ersten Leitung (11) eine Schalteinheit (26) vorgesehen ist, die sperrend oder in verschiedenen Richtungen elektrisch leitend schaltbar ist.

6. Bordnetz nach einem der Ansprüche 1 bis 5, **dadurch gekennzeichnet, dass** der Schalter (5, 6) ein drehbar gelagertes Schaltelement (35, 47) aufweist, dass das Schaltelement (35, 47) wenigstens zwei Endbereiche aufweist, dass das Schaltelement (35, 47) wenigstens in den Endbereichen elektrisch leitende Bereiche (36, 37, 47) aufweist, dass die elektrisch leitenden Bereiche (36, 37, 47) Leitungsflächen (38, 39, 40, 41, 42, 48, 49, 50, 51) zugeordnet sind, dass abhängig von der Drehposition des Schaltelementes (35, 47) über die leitenden Bereiche (36, 37, 47) verschiedene Leitungsflächen (38, 39, 40, 41, 42, 48, 49, 50, 51) miteinander elektrisch leitend kontaktiert werden.

7. Bordnetz nach Anspruch 6, **dadurch gekennzeichnet, dass** das Schaltelement in Form eines Balkens (35) ausgebildet ist, dass der Balken zwei voneinander isolierte elektrisch leitende Bereiche (36, 37) aufweist, dass die Leitungsflächen (36, 37) in Form von wenigstens teilbogenförmigen Leiterbahnen (38, 39, 40, 41, 42) angeordnet, dass die Leiterbahnen (38, 39, 40, 41, 42) unterschiedliche Krümmungsradien aufweisen und wenigstens teilweise in radialer Richtung hintereinander angeordnet sind, dass abhängig von der Schaltposition des Schaltelementes verschiedene Leiterbahnen (38, 39, 40, 41, 42) elektrisch leitend über die leitenden Bereiche (36, 37) miteinander verbunden sind.

8. Bordnetz nach Anspruch 6, **dadurch gekennzeichnet, dass** das Schaltelement in Form eines Drehelementes (47) mit wenigstens zwei Armen ausgebildet ist, dass das Drehelement (47) aus einem leitenden Material besteht und in einem Ring (43) drehbar gelagert ist, dass Endbereich der Arme in dem Ring (43) geführt sind, dass die Endbereiche Kontaktflächen (44, 45, 46) aufweisen, die auf einer Kontaktseite des Ringes (43) angeordnet sind, und dass der Kontaktseite des Ringes Schleifkontakte (48, 49, 50, 51) zugeordnet sind, dass der Ring (43) aus einem elektrisch isolierendem Material besteht, und dass abhängig von der Drehposition des Drehelementes (47) verschiedene Schleifkontakte (48, 49, 50, 51) über das Drehelement (47) elektrisch leitend miteinander verbunden werden.

## Claims

1. Electrical system (2) of a motor vehicle for several consumer loads (7, 8) comprising terminals for two batteries (3, 4), which may be connected to the electrical system (2) via two switches (5, 6) depending upon predefined states,
the two switches (5, 6) being connected to each other via a first conductor (11),
one switch (5, 6) being respectively connected to one of the two batteries (3, 4), the first switch (5) being connected to a first consumer load (7) via a second conductor (12) and the second switch (6) being connected to a second consumer load (8) via a third conductor (13),
the first switch (5) being connected to a starter generator unit (10) and to a current generator unit (9), **characterized in that** the second consumer load (8) is additionally connected to the first switch (5) via a redundant conductor (14).

2. Electrical system of claim 1, **characterized in that** one of the two batteries (3) is arranged in the front area of the motor vehicle (1) and the other battery (4) is arranged in the rear section of the motor vehicle (1).

3. Electrical system according to any one of claims 1 or 2, **characterized in that** the second consumer load (8) may be connected to the redundant conductor (14) via the second switch (6).

4. Electrical system according to any one of claims 1 to 3, **characterized in that** at least one control unit (23, 24) is provided for controlling the two switches (5, 6), **in that** the control unit (23, 24) is connected to the first and the second battery (3, 4) by means of a voltameter (21, 22), and **in that** the control unit (23, 24) provides the consumer loads with voltage from the first and/or the second battery (3, 4) depending on the voltages of the two batteries (3, 4).

5. Electrical system according to any one of claims 1 to 4, **characterized in that** in the first conductor (11) a switching unit (26) is provided which may be switched to turn off current or to electrically conduct in various directions.

6. Electrical system according to any one of claims 1 to 5, **characterized in that** the switch (5, 6) comprises a pivoted switching element (35, 47), the switching element (35, 47) comprising at least two end sections, the switching element (35, 47) comprising electrically conductive areas (36, 37, 47) at least in the end sections, the electrically conductive areas (36, 37, 47) being assigned to conductive faces (38, 39, 40, 41, 42, 48, 49, 50, 51), and **in that** various conductive faces (38, 39, 40, 41, 42, 48, 49, 50, 51) may be brought into electrically conductive contact to each other via the conductive areas (36, 37, 47) depending upon the pivot position of the switching element (35, 47).

7. Electrical system according to claim 6, **characterized in that** the switching element is in the shape of a girder (35), the girder comprising two electrically conductive areas (36, 37) isolated from each other, the conductive faces (36, 37) being arranged as at least partially arched conductors (38, 39, 40, 41, 42), the conductors (38, 39, 40, 41, 42) having differing radii of curvature and being arranged one after the other at least partially in radial direction, and **in that** depending upon the switching position of the switching element various conductors (38, 39, 40, 41, 42) are connected to each other in an electrically conductive manner via the conductive areas (36, 37).

8. Electrical system according to claim 6, **characterized in that** the switching element is in the shape of a rotary element (47) comprising at least two arms, the rotary element (47) consisting of a conductive material and being pivoted in a ring (43), **in that** end sections of the arms are guided in a ring (43), **in that** the end sections comprise contact pads (44, 45, 46) which are arranged on a contact-side of the ring (43), and **in that** sliding contacts (48, 49, 50, 51) are assigned to the contact-side of the ring, the ring (43) consisting of an electrically insulating material; and **in that** depending upon the pivot position of the rotary element (47) various sliding contacts (48, 49, 50, 51) are connected to each other in an electrically conductive manner via the rotary element (47).

## Revendications

1. Réseau de bord (2) de véhicule automobile conçu pour plusieurs utilisateurs (7, 8) avec des raccords pour deux batteries (3, 4) pouvant être reliés au réseau de bord (2) via deux commutateurs (5, 6) en fonction d'états prédéfinis ;
les deux commutateurs (5, 6) étant reliés entre eux via un premier câble (11) ;
un commutateur (5, 6) étant respectivement relié à une des deux batteries (3, 4), le premier commutateur (5) étant relié à un premier utilisateur (7) via un deuxième câble (12) et le deuxième commutateur (6) étant relié à un deuxième utilisateur (8) via un troisième câble (13) ;
le premier commutateur (5) étant relié à un générateur de démarrage (10) et à un générateur de courant (9), **caractérisé en ce que** le deuxième utilisateur (8) est en outre relié au premier commutateur (5) via un câble redondant (14).

2. Réseau de bord selon la revendication 1, **caractérisé en ce qu'**une des deux batteries (3) est disposée dans la zone avant du véhicule (1) et que l'autre batterie (4) est disposée dans la zone arrière du véhicule (1).

3. Réseau de bord selon l'une quelconque des revendications 1 ou 2, **caractérisé en ce que** le deuxième utilisateur (8) peut être relié au câble redondant (14) via le deuxième commutateur (6).

4. Réseau de bord selon l'une quelconque des revendications 1 à 3, **caractérisé en ce qu'**au moins un appareil de commande (23, 24) est prévu, ledit appareil étant prévu pour commander les deux commutateurs (5, 6), **en ce que** l'appareil de commande (23, 24) est relié à la première et à la deuxième batterie (3, 4) via un tensiomètre (21, 22) et **en ce que** l'appareil de commande (23, 24) alimente en courant les utilisateurs avec la première et/ou avec la deuxième batterie (3, 4) en:fonction des tensions des deux batteries (3, 4).

5. Réseau de bord selon l'une quelconque des revendications 1 à 4, **caractérisé en ce qu'**une unité de commutation (26) est prévue dans le premier câble (11), ladite unité pouvant être commutée de façon à conduire le courant soit de façon à le bloquer soit à le conduire dans des directions différentes.

6. Réseau de bord selon l'une quelconque des revendications 1 à 5, **caractérisé en ce que** le commutateur (5, 6) comporte un élément de commutation (35, 47) disposé de façon pivotante, que l'élément de commutation (35, 47) comporte au moins deux zones d'extrémité, que l'élément de commutation (35, 47) comporte des zones électriquement conductrices (36, 37, 47) au moins dans les zones d'extrémité, que les zones électriquement conductrices (36, 37, 47) sont associées à des surfaces de câble (38, 39, 40, 41, 42, 48, 49, 50, 51), qu'en fonction de la position de rotation de l'élément de commutation (35, 47), des surfaces de câble (38, 39, 40, 41, 42, 48, 49, 50, 51) différentes sont mises en contact de façon électriquement conductrice via les zones conductrices (36, 37, 47).

7. Réseau de bord selon la revendication 6, **caractérisé en ce que** l'élément de commutation prend la forme d'une barre (35), que la barre comporte deux zones (36, 37) électriquement conductrices isolées l'une par rapport à l'autre, que les surfaces de câble (36, 37) sont disposées sous la forme de pistes conductrices (38, 39, 40, 41, 42) au moins en forme d'arc partiel, que les pistes conductrices (38, 39, 40, 41, 42) présentent différents rayons de courbure et sont disposées au moins en partie les unes derrière les autres dans la direction radiale, que des pistes conductrices (38, 39, 40, 41, 42) sont reliées de façon électriquement conductrice entre elles via les zones conductrices (36, 37) en fonction de la position de commutation de l'élément de commutation.

8. Réseau de bord selon la revendication 6, **caractérisé en ce que** l'élément de commutation prend la forme d'un élément tournant (47) doté d'au moins deux bras, que l'élément tournant (47) se compose d'un matériau conducteur et est disposé de façon pivotante dans un anneau (43), que la zone d'extrémité des bras est guidée dans l'anneau (43), que les zones d'extrémité comportent des surfaces de contact (44, 45, 46) disposées sur un côté de contact de l'anneau (43) et que le côté de contact de l'anneau est associé à des contacts glissants (48, 49, 50, 51), que l'anneau (43) se compose d'un matériau électriquement isolant et que différents contacts glissants (48, 49, 50, 51) peuvent être reliés entre eux de façon électriquement conductrice via l'élément tournant (47) en fonction de la position de rotation de l'élément tournant (47).
